(19) Europäisches Patentamt
European Patent Office
Office européen des brevets

(11) **EP 2 175 379 A1**

(12) **EUROPEAN PATENT APPLICATION**

(43) Date of publication:
**14.04.2010 Bulletin 2010/15**

(51) Int Cl.:
**G06F 17/30** (2006.01)

(21) Application number: **08165999.7**

(22) Date of filing: **07.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **EADS Secure Networks Oy**
**00380 Helsinki (FI)**

(72) Inventors:
• **Savunen, Tapio**
**00850, Helsinki (FI)**

• **Salovuori, Heikki**
**00850, Helsinki (FI)**
• **Lahtinen, Olli-Pekka**
**02360, Espoo (FI)**

(74) Representative: **Äkräs, Tapio Juhani**
**KOLSTER OY AB**
**P.O. Box 148**
**(Iso Roobertinkatu 23)**
**00121 Helsinki (FI)**

(54) **Enhanced data access for information systems**

(57) An information system that comprises a data source that transmits a data item to a group of database instances using a packet-switched communication protocol in which retransmission of the data item to a database instance is independent from reception of an acknowledgement to the transmitted data item from the database instance. A database instance receives the data item from the data source, stores it as a present data item and opens access to the present data item. A data consumer queries information on the present data item from the database instance and is provided with means to detect whether the information included in a response to the query is valid or not. If the information is not valid, the data consumer initiates a new query from another destination.

Fig. 3A

**Description**

FIELD OF THE INVENTION

The present invention relates to information systems, and more particularly to information systems comprising a plurality of data sources, database instances and data consumers.

BACKGROUND OF THE INVENTION

In large multi-user information systems data is typically generated and accessed by a plurality of entities in a plurality of places. In order to facilitate efficient utilization of information, data is generally distributed to several database instances located in various places in the network. The requirement is, however, that the information needs to be available to processes and users applying it quickly and efficiently. In addition, it is important that the information is configured simply such that cost-effective implementations are possible.

Conventional systems apply many methods to ensure availability of information. One option is to maintain multiple copies of data, called replicas, stored in multiple storage instances, and the access to a replica is made uniform with access to a single, non-replicated entity. In high-availability clusters, for each piece of information there typically exists one or several replication masters. A replication master is in charge of consistence of data between separate database instances. In case of a single master, all the updates from information sources go through the single master and it controls the replication of the data to other instances. If several masters are involved (so called multi-master replication) a strict mechanism is needed to solve the conflicts between the simultaneous data updates. Different approaches exist for the conflict resolution: transaction timestamps, hierarchy of the origin nodes, etc.

These configurations typically apply pessimistic replication where replication mechanisms make sure that all database instances with the same data are updated in a proper way. Pessimistic algorithms synchronously coordinate replicas during accesses and block other users during an update. These algorithms fulfil strictest single-copy requirements, often referred as ACID properties (atomicity, consistency, isolation, durability). However, fulfilling all the replication requirements ends in complex replication mechanisms. This applies especially to systems with numerous database instances, several replication masters and unreliable connections between the instances.

In optimistic replication data may be accessed without a priori synchronization. Replicas are allowed to diverge and are guaranteed to converge when the system is idle. Optimistic replication faces the challenges of controlling diverging replicas and conflicts between concurrent operations. It has thus been considered applicable only for systems that can tolerate occasional conflicts and inconsistent data ("Optimistic Replication", YASUSHI SAITO, Hewlett-Packard Laboratories, Palo Alto, CA, USA and MARC SHAPIRO, Microsoft Research Ltd., Cambridge, UK).

In telecommunications, subscriber data is typically distributed to at least two database instances. Dynamic subscriber data is stored in one database that changes according to the mobility of the user. Static subscriber data is stored in a fixed database, which also maintains a pointer to the present database for dynamic subscriber data. However, in new advanced system, there are several aspects that drive towards other type of subscriber data configurations.

The demand to have several geographically distributed database instances is motivated at least partly by optimization of the transmission costs, partly by resilience requirements.

In a communications network there can be several nodes, which generate status information. In cellular networks for example mobile phone and base stations are sources of status information. Also many telecommunications services, as such, generate large volumes of status information, which needs to be distributed over the network. For example, mobile subscribers generate location updates when they move in a cellular network from the area of one base station to the area of another base station, or transmit updates of presence information to a presence server. The lifetime of such status information in communications systems is quite short. All this results in a large number of status information, the transmission of which needs to be carefully optimized.

In wide regional and nationwide networks it is possible that due to breaks in the transmission services, the network will be split into two or several isolated sub-networks. It would, however, be important that even in such an abnormal situation the isolated parts of the network are able to provide services in a proper way.

SUMMARY OF THE INVENTION

An object of the present invention is thus to provide a solution for implementing the method so as to meet at least some of the above demands and thus facilitate simpler and more cost-effective provision of dynamic data in an information system. The objects of the invention are achieved by an information system, an apparatus, a method and a computer program product, which are characterized by what is stated in the independent claims. The preferred embodiments of the invention are disclosed in the dependent claims.

The invention is based on the idea of using a less stringent process for data sourcing, and in the consuming end applying a validity check to recover from the situations where the lightened process fails. Contrary to the conventional understanding, there are numerous applications, especially in field of communications systems, where the increase of processes and traffic incurred by the validity checks is generously compensated by the reduction of traffic and processes of transactional database replication. This and further advantages of the invention are discussed in more detail with the following embodiments of the invention.

BRIEF DESCRIPTION OF THE DRAWINGS

In the following the invention will be described in greater detail by means of preferred embodiments with reference to the attached drawings, in which

Figure 1 provides a functional description of roles essential elements in the information system;
Figure 2 illustrates a network infrastructure of a communications system;
Figure 3A illustrates an embodiment applying the communications system of Figure 2;
Figure 3B illustrates another embodiment applying the communications system of Figure 2
Figure 3C illustrates another embodiment applying the communications system of Figure 2;
Figure 4 illustrates an embodiment of a method applied in the data source of the information system;
Figure 5 illustrates an embodiment of a method applied in the data consumer of the information system; and
Figure 6 illustrates a reference hardware configuration of an embodied apparatus.

DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment (s), or the feature in question does not only apply to a single embodiment. Single features of different embodiments may be combined to provide further embodiments.

The present invention relates to an information system where data provided from a plurality of sources is maintained in a plurality of database instances accessed by a plurality of consumers. A variety of apparatus and system configurations applying a variety of communication technologies may be used separately or in combinations to implement the embodiments of the invention. Information systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

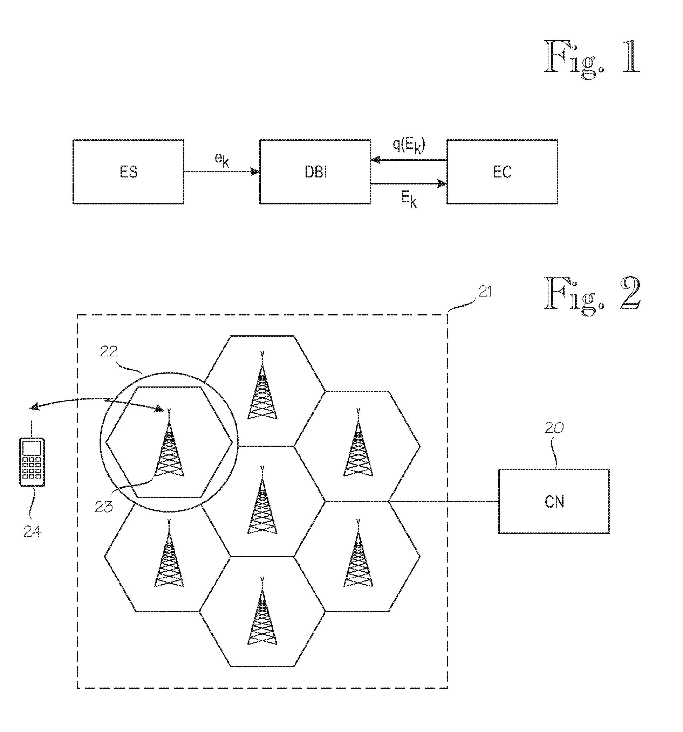

Figure 1 provides a functional description of roles essential elements in the information system 100 according to the invention. In general the term information system relates to a combination of persons, data records and activities that automatically and manually process data and information in a given organization. In this context the information system relates more specifically to an information technologies component of a generic information system, and therefore refers to any telecommunications and/or computer related equipment or interconnected system or subsystems of equipment that may be used in the acquisition, storage, manipulation, management, movement, control, display, switching, interchange, transmission, or reception of information, and includes software, firmware, and/or hardware.

Event source (ES) 10 illustrates an element that provides event data items ($e_k$) for utilization in the processes of the information system. An event $e_k$ refers here to an occurrence of significance to a task of an event consumer (EC) 12. An event data item $e_k$ is preferably implemented as a block of information that is coded in electronic form to allow computer devices and computer software of the information system to convert, store, protect process, transmit, and securely retrieve it in the processes of the information system. The information system is able to automatically detect and process the event data item $e_k$ that typically comprises one or more separable information elements $ie_k$, one of which carries the actual data on the occurrence. The task is associated with an entity recognized in the information system and therefore the event data item typically comprises an information element identifying the entity associated to the task. For example, if the entity is a user of the information system, the event data item typically comprises an information element indicating the identity of the user. In some cases distributed data items may relate to several tasks, and the event data item typically comprises and information element identifying the task the occurrence is significant to.

Depending on the implementation, indications by the information elements may be explicit or implicit. For example, event sources may be configured to provide data elements only on occurrences of one entity (e.g. their own) and therefore the origin of the data element may be determined from the source address of the message comprising the data item, and a separate information element to identify the entity is not needed. On the other hand, if the data items are only applied for one task, for example location information of the user, the task itself does not need to be separately indicated with an information element. The format of the event data items provided by different event sources is preferably the same such that further operations for enabling the task to access the information in the event data items are not needed. However, any intermediate element of the information system between the event source and the event consumer may be adapted to receive data items in various formats of various event sources and process them into various formats applied by various event consumers.

The event data items provided by the one or more event sources are delivered to a database (DB) 14. The database represents a systematically arranged collection of data, structured so that it can be automatically retrieved or manipulated. Input of event data items is preferably separate from output of event data so that transactions with event sources may be performed independently, without necessarily regarding the operations in the event consumer side. The event source may transmit information on its own initiative and/or independent from any other event source. Alternatively, the database may prompt or query event data items from event sources. In many embodiments one occurrence is notified by one event source only, so basically there is no evident need to detect and settle conflicts between event data items on same occurrence, the event data items received from two or more independent event sources. However, such configurations are not excluded from the scope, so when necessary, any conventional or new mechanism, known to a person skilled in the art, e.g. from the field of optimistic replication, may be used for the purpose.

Event consumer (EC) 12 represents here a logical element that applies event information. EC is operatively connected to the database and typically comprises a task, for example, an application, a service, a procedure, a process, a function, or the like that inputs event data and provides an output with the content and in the format of the task at hand. DB may send event data $(E_k)$ to EC of its own initiative, or EC may provide to DB a query $q(E_k)$, to which DB responds with event data $(E_k)$ derived on the basis of one or more stored event data items $(e_k)$. DB may, for example, forward the event data items $(e_k)$ to EC in the format it receives them or may process them to another format $(e_k')$ before providing them to EC.

In case the information system comprises only one database, all data items are delivered to it and inconsistencies in the event data stored in the database result from unsuccessful communications between the event source and the data base. If the amount of event sources increases, there are more probable links to fail, and the consistency of event data increases. Moreover, if there is more than one database in the system, the situation gets more complicated. The task maintained in EC typically requires that database actions are processed reliably and EC can apply any of the available databases such that the event data received from them is ubiquitously consistent. In order to achieve this, one database is conventionally elected as a primary replica that is responsible for handling all data items from ESs. After an update in the primary, it synchronously inputs the update to other secondary replicas. Access to any replica is blocked unless it is provably up to date. With a limited number of replicas such single-copy acknowledged mechanism works well. However, this approach does not allow building large systems with frequent updates, because its throughput and availability significantly suffer as the number of event sources and database instances increases.

The invented solution applies stochastic database replication where data items are provided from a plurality of event sources to a plurality of database instances, and use of present event data from database instances is allowed without mandatory requirement of its consistency. The event consumers, on the other hand, are configured to determine the validity of the received (applied or applicable) event data, and in case of invalid data to initiate another query for the event data. The solution assumes that event data in database instances replicate as stochastic processes that vary statistically according to transmission probabilities in links between the originating event sources and the receiving database instances. As a result, the event data in one database instance may deviate from event data in another database instance and from the actual situation; it is accepted that at least some event data at least at some time is incorrect. The event consumers are, however, able to detect invalid event data and trigger an appropriate procedure to retrieve valid event data from another place, for example from another database instance or from the original event source..

Implementation of the triggered procedure naturally causes additional operations and communications in the information system. However, the probability for a transmission of event data to succeed in various links may be quite easily estimated and improved. Typically throughput probabilities in communication links of information systems are relatively good, so the likelihood of new queries being initiated is actually very small. The increase of traffic from new queries is thus well compensated by the significant reduction in the number of exchanged acknowledgement messages within the information system. Due to the reduced amount of traffic and control operations associated to single event data deliveries, the distribution and application of event data items is faster and simpler. In addition, the information system according to the invention scales easily to larger configurations and very dynamic event data. This enables embodiments even in processes and services of mobility management and call control in wide area communications systems where, due to scalability and congestion problems, only conventional single-copy acknowledged database arrangements have been applicable so far.

The invention may be applied to any information system where event data is accessible from a plurality of parallel database instances. In the following, an embodiment of the invention applying a communications system of Figure 2 is described.

The embodied communications system provides wide area access to a plurality of users that have a user terminal and a subscription. With the combination of the user terminal and the subscriber identity the users have access to the services of the communications system. The network infrastructure of Figure 2 may be logically divided into core network 20 and radio access network 21 infrastructures. The core network 20 is a combination of exchanges and basic transmission equipment, which together provide the basis for network services. The radio access network 21 provides mobile access to a number of core networks of both mobile and fixed origin.

The simplified radio access network configuration shown in Figure 2 is a cellular system where a large area is divided into a number of sub-areas called cells. Each cell 22 has its own base station 23, which is able to provide a radio link for a number of simultaneous user terminals 24. In Figure 2 each cell corresponds to one base station site. A base station site may, however, also comprise more than one base station, each of which corresponds to an individual cell. A cell represents here a separately identifiable location area.

The radio access network may comprise a separate controlling network element, which manages the use and integrity of the radio resources of a group of one or more base stations. However, the radio network control functions may also be implemented in individual base stations. The present embodiment applies the latter configuration. The cellular system of Figure 2 represents a mobile communications system where mobile user terminals may access network services also during movement. It should be noted, however, that even if the embodiment is illustrated in a mobile communications system, it may be applied also in configurations, where a portable station may move from point to point but is used at a fixed access point at a time.

Connections between network elements in the radio access network and in the core network may be circuit switched or packet switched. A circuit switched type of connection is a connection for which dedicated network resources are allocated upon connection establishment and released upon connection release. A packet switched type of connection transports user information in packets so that each packet can be routed independently of a previous one. Transmissions over packet switched connections may be acknowledged or unacknowledged. An acknowledged transmission is repeated automatically until the entity in the addressed destination confirms that it has received it. Acknowledged transmission enables ensuring that planned information is duly exchanged and actions based on the information may be reliably performed. On the other hand, acknowledgement messages and repeated retransmissions increase traffic and may cause considerable delays to the overall communications. Unacknowledged transmissions, where the fact that an acknowledgement is not received from the destination, does not automatically cause retransmission, are well suited for dynamic multi-user packet switched communications.

The core network of the communications system comprises several subscriber registers for static and dynamic subscriber data. The static data is created when subscribers are provisioned and changes very rarely. Static data can thus be replicated between subscriber registers using conventional replication mechanisms. Dynamic subscriber data comprises subscriber data that may vary frequently according to events occurring to the subscriber. An event may result from an activity taken by the subscriber or from an activity or occurrence caused or happened to the subscriber.

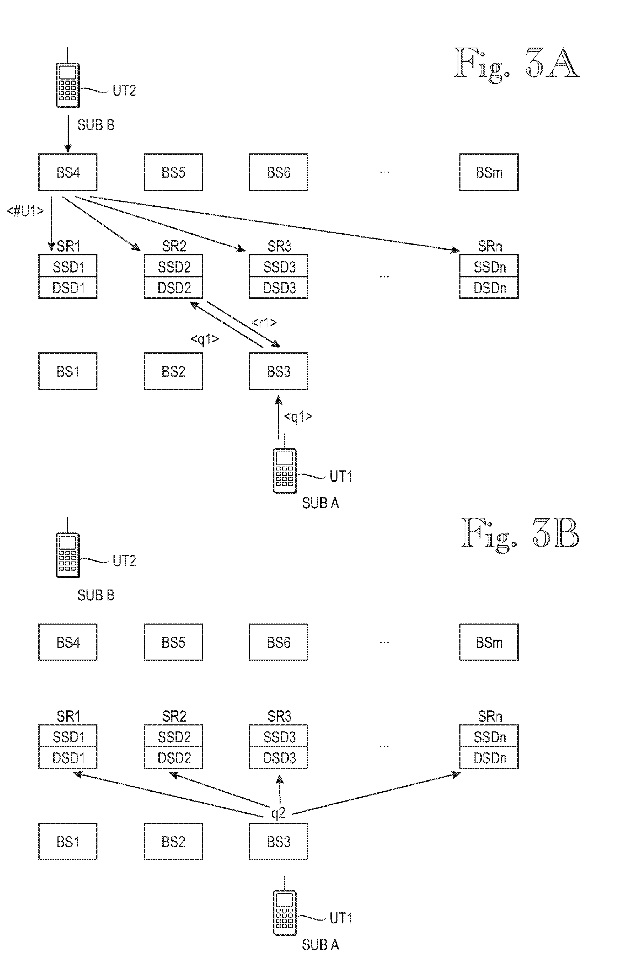

Figures 3A to 3C illustrate embodiments applying the communications system described in Figure 2. One of the essential processes of cellular networks is mobility management. The aim of the mobility management is to track where mobile subscribers are located, in order to deliver the calls, data messages and other services to them. Mobility management is based on location update procedure, which allows a user terminal to inform the cellular network about events regarding its location, for example, when the terminal moves from one location area to the next one. There are several reasons that prompt provision of updated location information to the network. Whenever the user terminal is switched on or off, the network may require it to perform a location update procedure. Also, user terminals are typically configured to use a periodic location update procedure to report their location regularly to the network. Whenever a user terminal moves from one location area to the next while not on a call, a random location update is typically performed. Random location update may also be performed by a stationary user terminal that reselects coverage from a cell in a different location area because of signal fade. Location update enables a user terminal to have reliable access to the network and be reached with a call, while enjoying the freedom of mobility within the whole coverage area.

In the present embodiment, referring to Figure 3A, the network of the communications system comprises a plurality of subscriber registers SR1, SR2, SR3, ..., SRn and a plurality of base stations BS1, BS2, ..., BSm , connected to a packet data network that provides packet switched communications to elements connected via it. It is noted that the applied configuration in the embodiment is a simplified example only. The base station configuration may vary considerably from implementation to implementation. The base stations receive location update messages from user terminals UT1, UT2 and act as event sources by providing the location update messages as event data items to the subscriber registers that store them as event data. In the present embodiment the databases are essentially parallel database instances that comprise both static subscriber data instances SSD1, SSD2, ..., SSDn and dynamic subscriber data instances DSD1, DSD2, ..., DSDn of all user terminals UT1, UT2.

It should be noted that the present embodiment deals with dynamic data provided by the user terminals and/or base stations of the radio access network. Conventionally communications networks have comprised a home location register for essentially static subscriber information and a visitor location register where all subscriber parameters for call set-up are stored as long as the mobile subscriber is in a location area controlled by this register. The home location register has, in addition to the static subscriber information, maintained a dynamic element that points to the present visitor location register where the user terminal presently resides. This division has been required to minimize the replication of dynamic data and thus to cope with the update resources available in the network. Due to the lightened update procedure, the invention also allows new distributed configurations for static and/or dynamic data, and thereby a while range of new query procedures optimized in view of load, geographic distance, or other considerations. Some new subscriber register configurations are discussed in more detail in this description.

From the plurality of base stations BS1, BS2, ..., BSm , a group of base stations BS1, BS2, BS3 are in area where a subscriber A with user terminal UT1 presently resides and another group of base stations BS4, BS5, ..., BSm in an area where another subscriber B with user terminal UT2 presently resides. When a base station BS4 receives a location update message from a user terminal UT2, it sends the message <lu1> as an event data item to all subscriber registers SR1, SR2, SR3, ..., SRn using a defined packet switched protocol that does not apply acknowledged transmissions. According to the earlier definition, this means that when a base station BS4 sends information on a location data update of UT2 of subscriber B to a database instance SR1, retransmission of the location update to SR1 is not dependent on acknowledgement from SR1, i.e. BS3 does not necessarily need to retransmit the location update to SR1, even if no acknowledgement is received from SR1.

BS3 may be configured to retransmit the location update at least once to SR2, notwithstanding whether it receives the acknowledgement or not. Such arrangement is actually preferred because it may significantly increase the probability of the location update messages getting though without, however, excessively increasing the traffic in the communications system.BS3 may also be configured to require, for some other purpose, acknowledgements from one or more databases or the databases may be configured to acknowledge the transmissions without the sender actually requiring it. In any case, in BS3 the decision whether to retransmit the event data item to a database instance is not mandatorily dependent on reception of an acknowledgement from the database instance.

When subscriber A that resides presently in the cell of BS3 wishes to call subscriber B, it initiates a call setup procedure in UT1. The call setup procedure is a task that applies event data of mobility management. In order to access appropriate call set-up parameters, a relevant subscriber register needs to be accessed. In the present embodiment, BS3 of subscriber A may select the database instance to which it sends the query requesting information on the present cell of subscriber B freely, i.e. randomly or according to any defined unique or ubiquitous selection criterion or criteria. In the present application, let us assume that BS3 is configured to send the query <q1> to SR2 that is geographically closest to it. SR2 responds with a message <r1> that includes UT1 as the present cell of BS4.

Having this information, BS3 sends the call setup signaling message to BS4 and if BS4 responds accordingly, the call setup continues normally from there on. The probability that the location information in a subscriber register is correct depends by far on the transmission mechanism used to deliver the location update message. The present embodiment applies IP multicast technology that uses user datagram protocol (UDP) as an underneath protocol, and does not provide mechanisms to ensure successful data transmission. Other corresponding packet-switched protocols that fulfil the claimed features may be applied without deviating from the scope of protection. For example the location update message may be multiplied and sent as a unicast message, one message being transmitted per one database instance.

In UDP, reliability is based on the properties of the protocol stack's lower layer, e.g. Ethernet. In IP networks the measure of the packet delivery probability is measured by packet loss, i.e. the probability that packets are not appropriately delivered. For example, in well-designed and maintained IP networks a typical figure of 0.1% for packet loss can be easily achieved:

$$Pr(\text{``IP packet lost''}) = 0.1\%$$

If it is assumed that base stations repeat the transmission of location update messages to subscriber registers two times to ensure the update delivery, and further that the packet loss probability of two successively repeated messages is independent and identically distributed the probability of the loss of location updates can be computed from:

$$Pr(\text{``location update message lost''}) = Pr(\text{``IP packet lost''})^2 = (1*106)^{-1}$$

In such circumstances every millionth location information reply from any subscriber register would be incorrect.

In order to control the number of unsuccessful call attempts due to incorrect data, the event consumer, here the querying base station, is configured to detect whether the information queried from the database instance is valid or not. For a person skilled in the art it is clear that such checks may be implemented in various ways. In this embodiment, the base station BS3 sends the call setup signalling message to BS4 and waits for a response for a defined period. In case BS4 responds positively during the period, the call setup procedure may continue normally. If the response is negative, for example indicates that UT2 does not reside in cell of BS4, or no response is received within the defined period, BS3 determines the received location information being invalid and initiates a new query to another destination.

Let us assume that before the call setup, subscriber has already moved to cell of BS5, but the location update message by BS5 has, for some reason, not reached SR2. Accordingly, the query proceeds as described earlier, but when BS3 sends the call setup message to BS4, BS4 does not find UT2 in its cell and acknowledges the message negatively. This causes a new query, the format and destination of which may vary considerably within the scope of protection.

Figure 3B illustrates an embodiment where BS3 detects that event data in <r1> is invalid and sends a new query for present location of subscriber B to all subscriber registers SR1, SR2, SR3, ..., SRn in the network. There may be a prevailing system definition that responses <r1> from subscriber registers comprise not only the present location of subscriber B but also a time stamp that indicates the time the respective location update message was delivered. When all responses from subscriber registers have arrived, BS3 is on the basis of the timestamps able to detect the most recent data and use the corresponding cell as the destination of the next query <q2>. The advantage of this approach is that it is simple, but still the most recent source of information quickly detected and the amount of repeated queries is thus minimized. As an aspect, after detecting the correct data (here the most recent data) BS3 can distribute it to all databases to improve the validity of the location information in their subsequent requests.

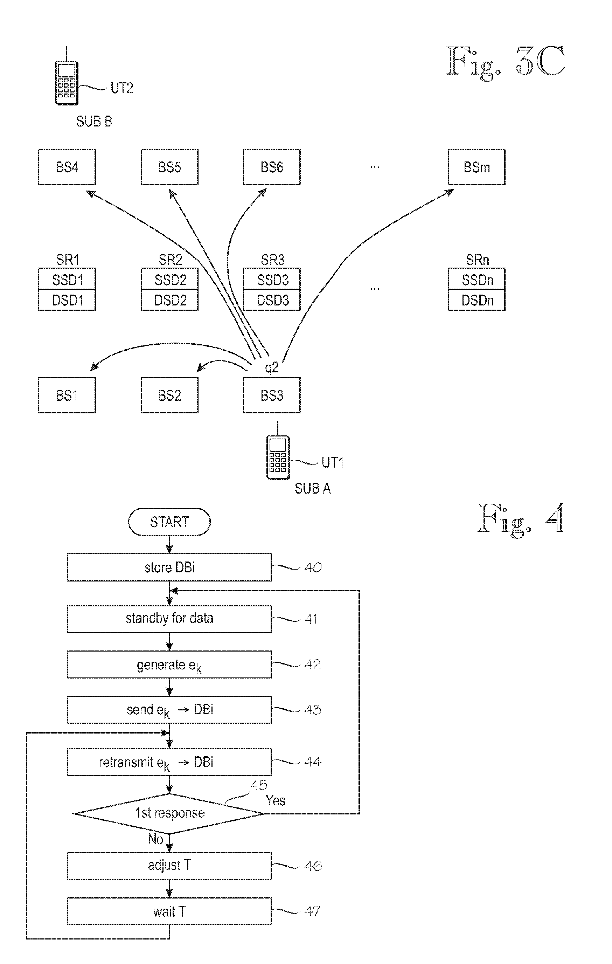

Figure 3C illustrates another approach where BS3 detects that event data in <r1> is invalid and sends a new query for present location of subscriber B directly to all other base stations BS1, BS2, ..., BSm. The base stations BS1-BS2, BS4, and BS6-BSm, in the cell of which UT2 does not reside, do not respond to the query or respond negatively. BS5, in the cell of which UT2 resides responds the query positively and the call setup signaling may continue. Again the approach is straightforward but very likely to succeed with minimal repeated transmissions.

Several other approaches for performing the new query are possible within the scope of protection. For example, the base stations may have some prior knowledge on probable locations of subscribers and use that to restrict the number of messages transmitted in the second query. For example, the subscriber identity may be associated to a particular domain in the network, and the querying base station may restrict the second query to those base stations, or subscriber registers closest to those base stations, and broaden the query to cover all base stations only on the third attempt.

The validity detection described in Figure 3A to 3C may also be varied without deviating from the scope of protection. For example, event data may be equipped with the time information, which is then applied to estimate the validity of the event data. For example, it may be defined that event data must be periodically refreshed; otherwise it is categorized to be obsolete. If such obsolete event data is retrieved from a subscriber register, the user terminal may, on the basis of the time information, determine that this piece of event data is too old and thus not reliable anymore . Alternatively, the subscriber register itself may check the associated time information and reply by indicating that this piece of event data is already obsolete. On the basis of such reply, the user terminal initiates a new query.

In the embodiments of Figures 3A to 3C the databases are registers that comprise both static and dynamic data. It is clear that in some implementations different data types may be divided into different database instances that are also updated differently. For example information that is updated very seldom and/or the correctness of which is essential, may be stored in one or more separate database instances and updated according to strictest transactional replication procedures, while more varying dynamic information is stored in a plurality of other database instances that are updated without mandatory acknowledgement procedures, as described above. More than two types of database instances with varying update procedures may be applied, for example, one for static event data, one for dynamic event data and one for semi-static event data. The update procedures of dynamic data may be as light as possible while the update procedures for semi-static data may be enhanced by schemes that enhance the probability of the event data transmissions to reach their destinations. Some such schemes are discussed in more detail later in the description.

It is also possible to integrate the static and dynamic event data to same database instances, but perform the updates according to the event data type in question. For example, in the embodiment of Figure 3B, the base stations may update location data to dynamic subscriber data instance parts DSD1, DSD2, ..., DSDn as described earlier, but dispatcher stations connected to the same packet data network may deliver their subscriber data updates to static subscriber data instance parts SSD1, SSD2, ..., SSDn with acknowledged transmissions.

The stochastic database replication embodiments of the invention provide several advantages. In a network there can be several geographically distributed subscriber registers, which means that transmission costs from database queries can be optimized. Several essentially parallel subscriber registers provide good resilience in case one of the registers is not able to provide service. In addition, if a large network gets split into several sub-networks due to breaks in the transmission services, the isolated parts of the network can provide services in a proper way. After the sub-networks are again reconnected, the subscriber registers will automatically converge towards the state of having the correct information about the network as a whole. Some additional synchronization mechanism can be used to quickly replicate the location data between the subscriber registers. It is further noted that database instances with less stringent update procedures may be implemented with relatively modest hardware and software implementations, no carrier grade and high availability platforms are necessarily needed. The simpler configuration is highly cost-efficient: less expensive and easier to maintain.

When discussing the pros and cons of the invention, it was noted that the operations to compensate the relaxed update procedures were dependent on the probability of the unacknowledged transmissions to succeed. It is clear that the invention may be further enhanced by actions that increase the likelihood of successful transmissions from event sources to databases. In the embodiments of Figure 3A to 3C, the probability was increased by retransmitting the location update by default after a defined period. Some other actions may be taken to increase the probability, as well. For example, advantageously the packet data network to carry the update messages is fully redundant, i.e. for all the connections from any point to another point there does not exist any single-point-of-failure (SPOF). In practice this requires duplicated routers, switches and other transmission elements and duplicated or alternate transmission paths. Advantageously there is also some mechanism in the network to restore the services after failures in transmission equipment or transmission links, for example a routing protocol like open shortest path first (OSPF).

The solution further allows the time period between two successively repeated update messages to be adjusted optimally according to the implementation. It may, for example, be defined that the event source sends first two transmissions with a short interval in between and then repeats transmissions with a considerably longer interval. For example, in the case of location updates, the base stations may be configured to transmit the location update messages to all database instances two times with some seconds interval and then retransmit the message with an increasing interval, (if acknowledged sending used). The time period between two successively repeated update messages is preferably longer than the convergence time of the network, for example with OSPF typically from seconds to tens of seconds. Otherwise it would be likely that during a service break both the first transmission and the retransmission would be lost. If the period between the retransmissions is long enough, it may be assumed that the network recovers from the fault during the period and at least one of the messages is delivered to the database instance.

In the embodiments of Figure 3A to 3C the base stations acted both as event sources and as event consumers. It is clear that in information systems the roles may change according to the type of event information and the process applying it. For example, in the case of communications systems, the event data items may be generated, distributed to database instances, and accessed in the database instances by the user terminal, or any network element, including a base station, a dispatcher workstation, an application server, an exchange, a service node, an access node, gateways or the like. For example, the event data items may comprise presence data, stored in an XML file and applied by a presence server. Event data items may also comprise stock rates, issued by various stock exchanges, compiled in databases of a plurality of stock rate servers, and accessed by a plurality of clients of the stock rate servers. Similar examples may be generated for, for example, collection and distribution of weather forecast information, currency rates, etc.

Figure 4 illustrates an embodiment of a method applied in the event source of the information system. Accordingly, the method is implemented in the base station of the system in Figures 3A to 3C, and description of these figures and following it may be applied comprehensively also to the solution of Figure 4. The procedure begins at a stage where the base station is connected to the network and ready for normal operation. To the base station is stored (step 40) identities or addresses of a group of parallel subscriber database instances $DB_i$ to which the base station is configured to send event data items. The group may comprise one database instance, all database instances of the information system, or a subgroup of them. The base station becomes standby (step 41) for information associated to data items, either generated by itself or input by other entities connected to it. In the embodied case, the base station becomes standby for location updates of the user terminals of the mobile communications system. When a location update arrives it generates (step 42) an event data item $e_k$ that comprises the location update information and sends (step 43) it to the stored group of database instances $DB_i$ using a packet-switched communication protocol in which non-reception of acknowledgement from a database instance does not automatically cause retransmission of the event data item to the database instance. In this embodiment, IP multicasting is assumed.

In conventional communications systems parallel subscriber database instances are not applied and dynamic information is available in one entity, the visitor location register, only. The embodied mechanism proposes an improved mechanism that enables distribution of subscriber data to several parallel database instances, which may be selected as the accessed entity according to, for example, their associated transmission distance, quality of the transmission link, or present availability.

The method may be further improved by a step where the base station at least once retransmits (step 44) the information element, notwithstanding whether an acknowledgement is received from any database or not. This increases the probability of the information in the databases being correct and thus reduces the associated need for new queries in fault situations.

The method may be also further improved by a procedure where the base station checks (step 45) whether at least one response from some database instance is received. If at least one response is received, it considers the throughput adequate and continues to step 41 to standby for further information. If not, the base station adjusts (step 46) a period T to a next retransmission and waits (step 47) this period T before proceeding to step 44 to retransmit the data item. The period T may be constant or it may increase or decrease between consecutive retransmissions, according to the application. This allows adjusting the amount of retransmissions to match the other configuration of the applied system.

It is noted that the steps/points, signaling messages and related functions described in any of the flow charts are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point.

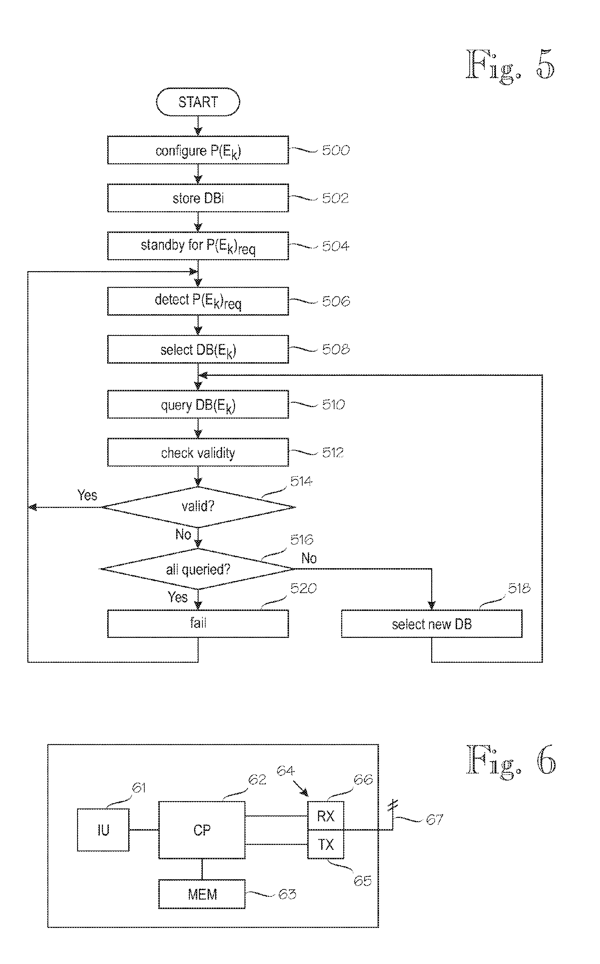

Figure 5 illustrates an embodiment of a method applied in the event consumer of the information system. Accordingly, the method is implemented in the base station of the system in Figures 3A to 3C, and description of these figures and following may be applied comprehensively also to the solution of Figure 5. The procedure begins at a stage where the base station is connected to the network and ready for normal operation. The base station is configured (step 500) with a process that applies event data, here a mobility management process P that forwards a call setup message according to the information on the present base station of the receiving user terminal $E_k$. To the base station are also stored (step 502) identities or addresses of a group of parallel subscriber database instances $DB_i$ in which information based on location updates from base stations are stored. This way the base station becomes standby (step 504) for requests by the process P for the event data $E_k$.

Whenever such request is detected (step 506), the base station selects a database $DB(E_k)$ from which event data for the mobility management procedure is queried. Due to the invention, this decision may be made freely according to, for example, transmission costs, quality of transmission links or present availability of the parallel databases. The base station performs a query (step 510) with the selected database $DB(E_k)$ and checks (step 512) the validity of the information in the response. This may be implemented by, for example, utilizing the event data in the process P and, on the basis of success or failure of the outcome, determine the validity of the used data. If (step 514) the result is valid, for example if the call setup message is duly acknowledged, the procedure continues to step 504 to standby for further information needs of the process P. If (step 514) the result is invalid, for example the call setup messages goes unanswered, and there are still unqueried databases (step 516), a new database is selected (step 518) and the procedure continues to step 510 to implement the query in the new selected database. Otherwise (step 516) the call setup fails (step 520) and the procedure moves to step 504 to standby for further information needs of the process P.

The block diagram in Figure 6 shows a reference hardware configuration applicable for user terminal, base station, database, or other element apparatuses disclosed in the previous embodiments.

The apparatus comprises an interface unit 61 with at least one input unit for inputting data to the internal processes of the apparatus and at least one output unit for outputting data from the internal processes of the apparatus. In a user terminal apparatus, the interface unit typically comprises a user interface with a keypad, a touch screen, a microphone, and equals for inputting data and a screen, a touch screen, a loudspeaker, and equals for outputting data. In a network element apparatus the interface unit typically comprises plug-in units acting as a gateway for information delivered to its external connection points and for information fed to the lines connected to its external connection points.

The interface unit 61 is electrically connected to a processor unit 62 for performing systematic execution of operations upon data. The processor unit 62 is a central element that essentially comprises an arithmetic logic unit, a number of special registers and control circuits. Memory unit 63, data medium where computer-readable data or programs, or user data can be stored, is connected to the processor unit 62. The memory unit 23 typically comprises volatile or non-volatile memory, for example EEPROM, ROM, PROM, RAM, DRAM, SRAM, firmware, programmable logic, etc.

A user terminal and a base station apparatus comprise a radio transceiver unit 64, which includes a transmitter 65 and a receiver 66, and is also electrically connected to the processor unit 62. The transmitter 65 receives a bitstream from the processor unit 62, and converts it to a radio signal for transmission by the antenna 67. Correspondingly, the radio signals received by the antenna 67 are led to the receiver 66, which converts the radio signal into a bitstream that is forwarded for further processor to the processor unit 62. The functions implemented by the processor unit 622 in transmission typically comprise encoding, reordering, interleaving, scrambling, channel multiplexing, and burst building.

The reference hardware configuration of some other network element apparatus corresponds with the configuration of the base station, but the typically does not comprise a radio transceiver unit.

The processor unit 62, memory unit 63, interface unit 62 and radio transceiver unit 64 are electrically interconnected to provide functional entities for performing systematic execution of operations on the received and/or stored data according to the predefined, essentially programmed processes of the apparatus. In solutions according to the invention, the functional entities of an event source apparatus comprise at least a database record for storing information on a group of database instances associated to a communication unit comprising a communication device and a module for identifying a subscriber using the communication device, an event manager for generating an event data item associated with the communication unit and a database interface a database interface for transmitting the event data item to the group of database instances in the database record. In solutions according to the invention, the functional entities of an event consumer apparatus comprise at least a database record for storing information on a group of database instances storing event data applied by the process, an event data provider for determining, from the group of database instances, a database instance and querying event data for the process from the database instance, and a validity detector for detecting whether information queried from the database instance is valid or not.. These operations are described in more detail with Figures 2 to 5.

The invention may also be embodied in a computer program product, readable by a computer and encoding a computer program of instructions for executing a computer process for controlling functions in an apparatus of an information system.

It will be obvious to a person skilled in the art that, as the technology advances, the inventive concept can be implemented in various ways. The invention and its embodiments are not limited to the examples described above but may vary within the scope of the claims.

**Claims**

1. An information system, **characterized by** comprising

   a data source configured to transmit a data item to a group of database instances using a packet-switched communication protocol in which retransmission of the data item to a database instance is independent from reception of an acknowledgement to the transmitted data item from the database instance;
   a database instance configured to receive the data item from the data source, store it as a present data item and open access to the present data item;
   a data consumer configured to query information on the present data item from the database instance:

      the data consumer being further configured to detect whether the information included in a response to the query is valid or not; and in response to the information being not valid, initiating a new query from another destination.

2. An apparatus, **characterized by**:

   a database record for storing information on a group of database instances associated to a communication unit comprising a communication device and a module for identifying a subscriber using the communication device;
   an event manager for generating a data item associated with the communication unit;
   a database interface for transmitting the data item to the group of database instances in the database record using a packet-switched communication protocol in which retransmission of the data item to a data base instance is independent from reception of an acknowledgement to the transmitted data item from the database instance.

3. An apparatus according to claim 2, **characterized by** the database interface being configured to retransmit the data item according to a predefined schedule.

4. An apparatus according to claim 2 or 3, **characterized by** the database interface being configured to retransmit the data item to the group of database instances until an acknowledgement is received from at least one database instance.

5. An apparatus according to claim 2, 3 or 4, **characterized by** the database interface being configured to retransmit the data item after a defined period from a previous transmission.

6. An apparatus according to 5, **characterized by** the period increasing from transmission to transmission.

7. An apparatus according to claim 5, **characterized by** the period being longer than a convergence time defined for the network.

8. An apparatus according to any of claims 2 to 7, **characterized by** the database record comprising two or more database instances maintaining parallelly event data associated to one subscriber.

9. An apparatus according to claim 8, **characterized by** the data item comprising at least one of the following types of subscriber data: mobility management data, presence data, call control data, service authorization data,

**10.** An apparatus, comprising:

a process configured to apply event data; **characterized by**
a database record for storing information on a group of database instances storing event data applied by the process;
an event data provider for determining, from the group of database instances, a database instance and querying event data for the process from the database instance;
a validity detector for detecting whether information included in a response to the query is valid or not; and
the event provider being configured to initiate, in response to the information being not valid, a new query from another destination.

**11.** An apparatus according to 10, **characterized by** the validity detector being configured to
detect whether the process applying the queried event data succeeds, and
initiate the new query in response to the process not succeeding.

**12.** An apparatus according to 10 or 11, **characterized by** the event provider being configured to
perform the new query in a group of other database instances;
receive responses comprising event data and an associated time stamp;
provide to the process event data associated to the most recent time stamp.

**13.** An apparatus according to 10 or 11, **characterized by** the event provider being configured to
send a query on the event to one or more event sources transmitting data items to the database instances;
receive a response including data on the event from an event source;
provide to the process the event data included in the response.

**14.** An apparatus according to 13, **characterized by** the event provider being configured to send the query to all event sources transmitting data items to the database instances in the database record.

**15.** An apparatus according to any of claims 10 to 14, **characterized by** the apparatus being a base station or a user terminal of a communications system.

**16.** An apparatus according to any of claims 10 to 15, **characterized by** the process being one of the following: call control procedure, mobility management procedure, procedure of a location application, and procedure of presence service.

**17.** A method, **characterized by**:

storing information on a group of database instances associated to a communication unit comprising a communication device and a module for identifying a subscriber using the communication device;
generating a data item associated with the communication unit;
transmitting the data item to the group of database instances in the database record using a packet-switched communication protocol in which retransmission of the data item to a data base instance is independent from reception of an acknowledgement to the transmitted data item from the database instance.

**18.** A method, **characterized by** comprising:

applying event data;
storing information on a group of database instances storing event data applied by the process;
determining, from the group of database instances, a database instance and querying event data for the process from the database instance;
detecting whether information included in a response to the query is valid or not; and
initiating, in response to the information being not valid, a new query from another destination.

**19.** A computer program product readable by a computer and encoding a computer program of instructions for executing a computer process for controlling functions in an apparatus of an information system, **characterized by** the process including steps of the method of claims 17-18

Fig. 1

Fig. 2

Fig. 3A

UT2

SUB B

| BS4 | BS5 | BS6 | ... | BSm |

<#U1>

| SR1 | SR2 | SR3 | | SRn |
| SSD1 | SSD2 | SSD3 | ... | SSDn |
| DSD1 | DSD2 | DSD3 | | DSDn |

<r1>

<q1>

| BS1 | BS2 | BS3 |

<q1>

UT1

SUB A

Fig. 3B

UT2

SUB B

| BS4 | BS5 | BS6 | ... | BSm |

| SR1 | SR2 | SR3 | | SRn |
| SSD1 | SSD2 | SSD3 | ... | SSDn |
| DSD1 | DSD2 | DSD3 | | DSDn |

q2

| BS1 | BS2 | BS3 |

UT1

SUB A

Fig. 3C

UT2

SUB B

| BS4 | | BS5 | | BS6 | ... | BSm |

| SR1 | | SR2 | | SR3 | | SRn |
| SSD1 | | SSD2 | | SSD3 | | SSDn |
| DSD1 | | DSD2 | | DSD3 | | DSDn |

q2

| BS1 | | BS2 | | BS3 |

UT1

SUB A

Fig. 4

```
        START
          │
    store DBi          ~ 40
          │
  standby for data     ~ 41
          │
   generate e_k        ~ 42
          │
  send e_k → DBi       ~ 43
          │
 retransmit e_k → DBi  ~ 44
          │
                45
      1st response  ──── Yes
          │ No
     adjust T          ~ 46
          │
      wait T           ~ 47
```

Fig. 5

```
                    ┌──────────┐
                    │  START   │
                    └────┬─────┘
                         ▼
              ┌──────────────────────┐
              │   configure P(Eₖ)    │ ── 500
              └──────────┬───────────┘
                         ▼
              ┌──────────────────────┐
              │      store DBi       │ ── 502
              └──────────┬───────────┘
                         ▼
              ┌──────────────────────┐
              │  standby for P(Eₖ)req │ ── 504
              └──────────┬───────────┘
                         ▼
              ┌──────────────────────┐
              │   detect P(Eₖ)req    │ ── 506
              └──────────┬───────────┘
                         ▼
              ┌──────────────────────┐
              │    select DB(Eₖ)     │ ── 508
              └──────────┬───────────┘
                         ▼
              ┌──────────────────────┐
              │    query DB(Eₖ)      │ ── 510
              └──────────┬───────────┘
                         ▼
              ┌──────────────────────┐
              │    check validity    │ ── 512
              └──────────┬───────────┘
                         ▼            514
                    ◇─────────◇
         Yes   ◄────◇ valid?  ◇
                    ◇─────────◇
                         │ No        516
                    ◇─────────◇      No
                    ◇all queried◇ ──────►
                    ◇─────────◇
                         │ Yes
                       520              518
              ┌──────────┐      ┌──────────────┐
              │   fail   │      │ select new DB │
              └──────────┘      └──────────────┘
```

Fig. 6

```
┌─────────────────────────────────────────────────┐
│                    64                            │
│      61          62    ↘    66                   │
│   ┌─────┐    ┌────────┐   ┌────┐                 │
│   │ IU  │────│   CP   │───│ RX │  ⚡── 67         │
│   └─────┘    │        │   ├────┤                 │
│              └───┬────┘   │ TX │                 │
│                  │        └────┘                 │
│              ┌───────┐       65                  │
│              │  MEM  │ ── 63                      │
│              └───────┘                           │
└─────────────────────────────────────────────────┘
```

Europäisches
Patentamt

European
Patent Office

Office européen
des brevets

**EUROPEAN SEARCH REPORT**

Application Number

EP 08 16 5999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 420 192 A (QUADSTONE LTD [GB]) 17 May 2006 (2006-05-17) * page 2, line 32 - page 14, line 10 * ----- | 1-19 | INV. G06F17/30 |
| X | KHOUSSAINOV R ET AL: "Independent proprietorship and competition in distributed web search architectures" ENGINEERING OF COMPLEX COMPUTER SYSTEMS, 2001. PROCEEDINGS. SEVENTH IE EE INTERNATIONAL CONFERENCE ON JUNE 11-13, 2001, PISCATAWAY, NJ, USA,IEEE, 11 June 2001 (2001-06-11), pages 191-199, XP010547882 ISBN: 978-0-7695-1159-7 * the whole document * ----- | 1-19 | |
| A | EP 0 287 310 A (WESTINGHOUSE ELECTRIC CORP [US]) 19 October 1988 (1988-10-19) * the whole document * ----- | 1-19 | |
| A | CRASKE G ET AL: "DOK-Trader: a CORBA persistent trader with query routing facilities" DISTRIBUTED OBJECTS AND APPLICATIONS, 1999. PROCEEDINGS OF THE INTERNA TIONAL SYMPOSIUM ON EDINBURGH, UK 5-6 SEPT. 1999, LOS ALAMITOS, CA, USA,IEEE COMPUT. SOC, US, 5 September 1999 (1999-09-05), pages 230-240, XP010352180 ISBN: 978-0-7695-0182-6 * the whole document * ----- -/-- | 1-19 | TECHNICAL FIELDS SEARCHED (IPC) G06F G06N |

The present search report has been drawn up for all claims

| Place of search | Date of completion of the search | Examiner |
|---|---|---|
| The Hague | 27 February 2009 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 16 5999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANGELA CARRILLO-RAMOS ET AL: "Adapted Information Retrieval in Web Information Systems Using PUMAS" AGENT-ORIENTED INFORMATION SYSTEMS III LECTURE NOTES IN COMPUTER SCIENCE;LECTURE NOTES IN ARTIFICIAL INTELLIG ENCE;LNCS, SPRINGER, BERLIN, DE, vol. 3529, 1 January 2006 (2006-01-01), pages 243-258, XP019050625 ISBN: 978-3-540-48291-8 * the whole document * ----- | | |
| | | | TECHNICAL FIELDS SEARCHED (IPC) |

The present search report has been drawn up for all claims

| Place of search | Date of completion of the search | Examiner |
|---|---|---|
| The Hague | 27 February 2009 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 5999

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2009

| Patent document cited in search report | | Publication date | Patent family member(s) | | Publication date |
|---|---|---|---|---|---|
| GB 2420192 | A | 17-05-2006 | WO | 2006051297 A1 | 18-05-2006 |
| | | | US | 2006116986 A1 | 01-06-2006 |
| EP 0287310 | A | 19-10-1988 | JP | 2270067 A | 05-11-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YASUSHI SAITO.** Optimistic Replication. *Hewlett-Packard Laboratories*